(19) Europäisches Patentamt
European Patent Office
Office européen des brevets

(11) EP 2 258 767 A1

(12) EUROPEAN PATENT APPLICATION
published in accordance with Art. 153(4) EPC

(43) Date of publication:
**08.12.2010 Bulletin 2010/49**

(21) Application number: **08739036.5**

(22) Date of filing: **27.03.2008**

(51) Int Cl.:
***C08L 27/12*** (2006.01) ***F16J 15/32*** (2006.01)

(86) International application number:
**PCT/JP2008/055907**

(87) International publication number:
**WO 2009/118860 (01.10.2009 Gazette 2009/40)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **NOK Corporation**
**Minato-ku**
**Tokyo 105-8585 (JP)**

(72) Inventors:
- **HIROSE, Shiro**
**Fujisawa-shi**
**Kanagawa 251-0042 (JP)**
- **MIZUTA, Hirotaka**
**Fujisawa-shi**
**Kanagawa 251-0042 (JP)**
- **SUZUKI, Nozomu**
**Fujisawa-shi**
**Kanagawa 251-0042 (JP)**

(74) Representative: **Gulde Hengelhaupt Ziebig & Schneider**
**Patentanwälte - Rechtsanwälte**
**Wallstrasse 58/59**
**10179 Berlin (DE)**

# (54) FLUORORUBBER COMPOSITIONS AND CROSSLINKED FLUORORUBBER

(57) Object: To provide fluororubber compositions and crosslinked fluororubber products that are suitable for use as rotary shaft seals, in which each of the initial characteristics, i.e., torque reduction (reduced friction) and sealing properties attributed to reduced oil leakage (oil pump rate when the seal member slides), can be improved, and degradation of these characteristics can be inhibited even after frictional abrasion.

Solution Means: A fluororubber composition obtained by blending a polyol crosslinking agent into a fluororubber polymer comprising 70 to 90 wt% of a polyol-crosslinkable fluororubber polymer (A) and 30 to 10 wt% of a peroxide-crosslinlcable fluororubber polymer (B); and a fluororubber composition obtained by blending a polyol crosslinking agent and a peroxide crosslinking agent into a fluororubber polymer comprising 40 to 90 wt% of a polyol-crosslinkable fluororubber polymer (A) and 60 to 10 wt% of a peroxide-crosslinkable fluororubber polymer (B).

EP 2 258 767 A1

## Description

### Technical Field

The present invention relates to fluororubber compositions and crosslinked fluororubber products, and more particularly, to fluororubber compositions and crosslinked fluororubber products that are suitable for use as rotary shaft seals, in which each of the initial characteristics, i.e., torque reduction (reduced friction) and sealing properties attributed to reduced oil leakage (oil pump rate when the seal member slides), can be improved, and degradation of these characteristics can be inhibited even after frictional abrasion.

### Background Art

With the recent growing concern for environmental issues, there is a need to reduce the friction of various components with a view toward improving the fuel efficiency. The development of oil seals in view of friction reduction is also ongoing.

Oil seals in which vinylidene fluoride fluororubber (FKM) is used as a base polymer in view of heat and oil resistance, etc., have been heretofore known (Patent Documents 1, 2, and 3).

Oil seals having low friction properties and sealing properties as initial characteristics have been proposed. Nevertheless, sliding members such as oil seals are subject to frictional abrasion; hence, it has been a great technical challenge to maintain the above-mentioned characteristics over a long period of time. More specifically, although various materials with reduced frictional abrasion properties have been proposed for fluororubber (FKM) sliding members, it has been difficult to ensure sufficient low friction and sealing properties of these materials.

Patent Document 1: Japanese Unexamined Patent Publication No. 9-143327
Patent Document 2: Japanese Unexamined Patent Publication No. 8-151565
Patent Document 3: Japanese Unexamined Patent Publication No. 3-66714

### Disclosure of the Invention

### Problems to be Solved by the Invention

The present invention is intended to solve the above-mentioned prior art problems. An object of the invention is to provide fluororubber compositions and crosslinked fluororubber products that are suitable for use as rotary shaft seals, in which each of the initial characteristics, i.e., torque reduction (reduced friction) and sealing properties attributed to reduced oil leakage (oil pump rate when the seal member slides), can be improved, and degradation of these characteristics can be inhibited even after frictional abrasion.

Other objects of the invention will become apparent from the following description.

### Means for Solving the Problem

The above-mentioned objects will be solved by the inventions set forth below.

The invention as defined in claim 1 is a fluororubber composition obtained by blending a polyol crosslinking agent into a fluororubber polymer comprising 70 to 90 wt% of a polyol-crosslinkable fluororubber polymer (A) and 30 to 10 wt% of a peroxide-crosslinkable fluororubber polymer (B) (this fluororubber composition is hereinafter referred to as "the first fluororubber composition").

The invention as defined in claim 2 is a fluororubber composition obtained by blending a polyol crosslinking agent and a peroxide crosslinking agent into a fluororubber polymer comprising 40 to 90 wt% of a polyol-crosslinkable fluororubber polymer (A) and 60 to 10 wt% of a peroxide-crosslinkable fluororubber polymer (B) (this fluororubber composition is hereinafter referred to as "the second fluororubber composition,").

The invention as defined in claim 3 is the fluororubber composition according to claim 1 or 2, wherein the polyol-crosslinkable fluororubber polymer (A) is vinylidene fluoride/hexafluoropropylene fluororubber bipolymer that is crosslinkable with a polyol; and
the peroxide-crosslinkable fluororubber polymer (B) is vinylidene fluoride/hexafluoropropylene/perfluoroalkyl vinyl ether fluororubber terpolymer that is crosslinkable with a peroxide.

The invention as defined in claim 4 is a crosslinked fluororubber product obtained by crosslinking a fluororubber polymer comprising 70 to 90 wt% of a polyol-crosslinkable fluororubber polymer (A) and 30 to 10 wt% of a peroxide-crosslinkable fluororubber polymer (B), using a polyol crosslinking agent alone (this crosslinked fluororubber product is hereinafter referred to as the "first crosslinked fluororubber product).

The invention as defined in claim 5 is a crosslinked fluororubber product obtained by crosslinking a fluororubber polymer comprising 40 to 90 wt% of a polyol-crosslinkable fluororubber polymer (A) and 60 to 10 wt% of a peroxide-crosslinkable fluororubber polymer (B), using a polyol crosslinking agent and a peroxide crosslinking agent in combination.
The invention as defined in claim 6 is the crosslinked fluororubber product according to claim 4 or 5, wherein the polyol-crosslinkable fluororubber polymer (A) is vinylidene fluoride/hexafluoropropylene fluororubber bipolymer that is crosslinkable with a polyol; and the peroxide-crosslinkable fluororubber polymer (B) is vinylidene fluoride/hexafluoropropylene/perfluaroalkyl vinyl ether fluororubber terpolymer that is crosslinlcable with a peroxide.
The invention as defined in claim 7 is the crosslinked fluororubber product according to claim 4, 5, or 6, which is used as a rotary shaft seal.

Effects of the Invention

In accordance with the invention, there are provided fluororubber compositions and crosslinked fluororubber products that are suitable for use as rotary shaft seals, in which each of the initial characteristics, i.e., torque reduction (reduced friction) and sealing properties attributed to reduced oil leakage (oil pump rate when the seal member slides), can be improved, and degradation of these characteristics can be inhibited even after frictional abrasion.

Brief Description of the Drawings

Fig. 1 is a diagram showing an oil seal of the invention as appropriately installed.

Explanation of Reference Numerals

1: oil seal
2: seal lip portion
3: garter spring
4: oil film
5: contact width

Best Mode for Carrying Out the Invention

Embodiments of the invention are described below.

1. First Fluororubber Composition and Crosslinked Fluororubber Product

The first fluororubber composition is obtained by blending a polyol crosslinking agent into a fluororubber polymer comprising 70 to 90 wt% of a polyol-crosslinkable fluororubber polymer (A) and 30 to 10 wt% of a peroxide-crosslinkable fluororubber polymer (B). The first crosslinked fluororubber product is obtained by crosslinking the above-mentioned fluororubber polymer using a polyol alone.
A polymer or copolymer of one or more fluorine-containing olefins can be used as the polyol-crosslinkable fluororubber polymer (A).
Specific examples of fluorine-containing olefins include vinylidene fluoride, hexafluoropropylene, pentafluoropropylene, trifluoroethylene, trifluorochloroethylene, tetrafluoroethylene, vinyl fluoride, perfluoroacrylate ester, perfluoroalkyl acrylate, perfluoromethyl vinyl ether, and perfluoropropyl vinyl ether. These fluorine-containing olefins can be used alone or in combination.
In the invention, preferable examples of polyol-crosslinkable fluororubber polymers include vinylidene fluoride/hexafluoropropylene binary copolymer (abbr.: VDF-HFP), etc. These polymers can be obtained by solution polymerization, suspension polymerization, or emulsion polymerization according to a known method, and are commercially available (e.g., Viton A by E. I. du Pont de Nemours & Co.).
A ternary copolymer of fluorine-containing olefin(s) that are crosslinkable with a peroxide can be used as the peroxide-crosslinkable fluororubber polymer (B).
Examples of fluorine-containing olefins include those mentioned for the polyol-crosslinkable fluororubber polymer (A).
An example of the fluororubber terpolymer of the invention is vinylidene fluoride/hexafluoropropylene/perfluoroalkyl vinyl ether fluororubber terpolymer (abbr.: VdF/TFE/PMVE) that is crosslinkable with a peroxide.
These polymers can be obtained by solution polymerization, suspension polymerization, or emulsion polymerization according to a known method, and are commercially available (e.g., the GLT-type and GFLT-type by E. I. du Pont de Nemours & Co.).

The proportion of the polyol-crosslinkable fluororubber polymer (A) and the peroxide-crosslinkable fluororubber polymer (B) that constitute the fluororubber polymer is such that the polyol-crosslinkable fluororubber polymer (A) is present in an amount of 70 to 90 wt%, and preferably 70 to 85 wt%, and the peroxide-crosslinkable fluororubber polymer (B) is present in an amount of 30 to 10 wt%, and preferably 30 to 15 wt% (the total weight amount of the two polymer components is 100 wt%).

If the proportion of the two polymer components falls out of the above-mentioned range, the effects of the invention cannot be attained when crosslinking is performed using a polyol alone.

Bisphenols are preferable as the polyol crosslinking agent used in the first fluororubber composition. Specific examples of bisphenols include polyhydroxy aromatic compounds such as 2,2-bis(4-hydroxyphenyl)propane [bisphenol A]; 2,2-bis(4-hydroxyphenyl)perfluoropropane [bisphenol AF]; bis(4-hydroxyphenyl)sulfone [Bisphenol S]; bisphenol A-bis [diphenyl phosphate]; 4,4'-dihydroxydiphenyl; 4,4'-dihydroxydiphenylmethane; and 2,2-bis(4-hydroxyphenyl)butane. For example, bisphenol A and bisphenol AF can be preferably used. These bisphenols may be in the form of alkali metal salts or alkaline earth metal salts.

Moreover, a commercially available masterbatch containing a raw rubber and a crosslinking agent may be used as the polyol crosslinking agent. These crosslinking agents may be used alone or in combination.

The content of the polyol crosslinking agent is preferably 0.4 to 20 parts by weight, and more preferably 1.0 to 10.0 parts by weight, per 100 parts by weight of the fluororubber polymer.

A crosslinking accelerator can be used in the first fluororubber composition; an example of such a crosslinking accelerator is a quaternary phosphonium salt represented by the formula $(R_1R_2R_3R_4P)^+X^-$, wherein $R_1$ to $R_4$ are individually a $C_1$-$C_{25}$ alkyl, alkoxy, aryl, alkyl aryl, aralkyl, or polyoxyalkylene group, or two or three of $R_1$ to $R_4$, taken together with P, may form a heterocyclic structure; and $X^-$ is an anion such as $Cl^-$, $Br^-$, $I^-$, $HSO_4^-$, $H_2PO_4^-$, $RCOO^-$, $ROSO_2^-$, $RSO^-$, $ROPO_2H^-$, $CO_3^-$, or the like.

Specific examples of quaternary phosphonium salts include tetraphenylphosphonium chloride, triphenylbenzylphosphonium chloride, triphenylbenzylphosphonium bromide, triphenylmethoxymethylphosphonium chloride, triphenylmethylcarbonyl methylphosphonium chloride, triphenylethoxycarbonyl methylphosphonium chloride, trioctylbenzyl phosphonium chloride, trioctylmethyl phosphonium bromide, trioctylethyl phosphonium acetate, trioctylethyl phosphonium dimethylphosphate, tetraoctyl phosphonium chloride, and cetyldimethylbenzyl phosphonium chloride.

A commercially available masterbatch containing a raw rubber and a crosslinking accelerator may also be used as the crosslinking accelerator. Further, these crosslinking accelerator may be used alone or in combination.

As a crosslinking agent, a quaternary ammonium salt represented by the formula (1) below can be used either alone or in combination with any of the above-mentioned quaternary phosphonium salts:

[Chem.1]

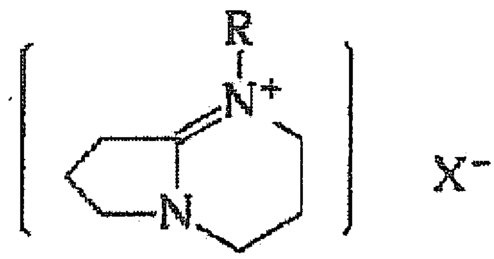

wherein R represents a $C_1$-$C_{24}$ alkyl group or a $C_7$-$C_{20}$ aralkyl group; and $X^-$ represents a tetrafluoroborate group or a hexafluorophosphate group.

Compounds wherein R is a benzyl group are preferable as the quaternary ammonium salt; examples of such compounds include 5-benzyl-1,5-diazabicyclo[4.3.0]-5-nonenium tetrafluoroborate (abbr.: DBN-F) and hexafluorophosphate (abbr.: DBN-P). The tetrafluoroborate and hexafluorophosphate have melting points of about 80°C and 100°C, respectively, and exhibit excellent dispersibility because they easily melt during heat kneading (100°C) using a roll, a kneader, a Banbury mixer, or the like.

A commercially available masterbatch containing a raw materials rubber and a quaternary ammonium salt can also be used as the quaternary ammonium salt. These crosslinking accelerators may be used alone or in combination.

The content of the polyol crosslinking accelerator is preferably 0.3 to 20 parts by weight, and more preferably

0.5 to 10 parts by weight, per 100 parts by weight of the fluororubber polymer.

In the first fluororubber composition, in addition to the above-mentioned ingredients, rubber compounding ingredients generally used in the rubber industry can be added insofar as the effects of the crosslinking agent and crosslinking accelerator used in the invention are not impaired. Examples of such ingredients include reinforcing agents such as carbon black, carbon fiber, etc.; fillers such as hydrotalcite ($Mg_6Al_2(OH)_{16}CO_3$), calcium carbonate, magnesium carbonate, aluminum hydroxide, magnesium hydroxide, aluminum silicate, magnesium silicate, calcium silicate, potassium titanate, titanium oxide, barium sulfate, aluminum borate, glass fiber, aramid fiber, diatomaceous earth, wollastonite, etc.; processing aids such as waxes, metal soaps, carnauba wax, etc.; acid acceptors such as calcium hydroxide, magnesium oxide, zinc oxide, etc; antioxidants; thermoplastic resins; clay; and other fibrous fillers.

Among the above, calcium hydroxide can be preferably used to suitably adjust the crosslinking density, and is preferable to reduce the friction coefficient of the crosslinked fluororubber product, or achieve low rebound resilience of the crosslinked fluororubber product. Further, calcium hydroxide is desirable in that foaming does not easily occur during molding. Magnesium oxide can also be preferably used to achieve low rebound resilience of the crosslinked fluororubber product, or achieve low friction coefficient and low tackiness of the crosslinked fluororubber product.

The first fluororubber composition can be prepared by, for example, a method in which predetermined amounts of the above-mentioned ingredients are kneaded in an enclosed mixing machine, such as an internal mixer, a kneader, a Banbury mixer, or a general kneading machine for rubber, such as an open roll mill; or by a method in which the above-mentioned ingredients are dissolved in a solvent or the like, and dispersed with a stirrer or the like.

The thus-prepared fluororubber composition is pressurized, heated, and crosslinked (vulcanized) to mold a crosslinked product (vulcanizate).

Specifically, the thus-prepared fluororubber composition is heated for about 1 to 120 minutes typically at a temperature of 140 to 230°C (primary crosslinking (vulcanization)), using an injection molding machine, a compression molding machine, a vulcanizing press machine, an oven, or the like, and is thereby crosslinked (vulcanized) to mold a vulcanizate (the first crosslinked fluororubber product).

The primary crosslinking (vulcanization) is a process of crosslinking the fluororubber composition to such a degree that its shape can be maintained to form (preform) a certain shape. In the case of a complicated shape, the composition can be preferably molded in a mold. Primary crosslinking (vulcanization) can also be performed in an oven, such as an air heater or the like.

In the invention, secondary crosslinking (vulcanization) can also be performed, as required. When secondary crosslinking (vulcanization) is performed, it may be performed according to a general method, but is preferably performed by, for example, 1 to 20 hours of heat treatment at 200 to 300°C.

The first crosslinked fluororubber product obtained by crosslinking using a polyol alone can be used as, for example, a rotary shaft seal; the first crosslinked fluororubber composition of the invention exhibits significant effects when used as a rotary shaft seal.

2. Second Fluororubber Composition and Crosslinked Fluororubber Product

The second fluororubber composition is obtained by blending a polyol crosslinking agent and a peroxide crosslinking agent into a fluororubber polymer comprising 40 to 90 wt% of a polyol-crosslinkable fluororubber polymer (A) and 60 to 10 wt% of a peroxide-crosslinkable fluororubber polymer (B). The second crosslinked fluororubber product is obtained by crosslinking the above-mentioned fluororubber polymer, using a polyol crosslinking agent and a peroxide crosslinking agent in combination.

Compounds mentioned as the fluororubber polymer of the first fluororubber composition can be used as the fluororubber polymer component (compound) used in the second fluororubber composition. The second fluororubber composition, however, differs from the first fluororubber composition in the proportion of the polyol-crosslinkable fluororubber polymer (A) and the peroxide-crosslinkable fluororubber polymer (B).

Specifically, in the second fluororubber composition, the proportion of the polyol-crosslinkable fluororubber polymer (A) and the peroxide-crosslinkable fluororubber polymer (B) is such that the polyol-crosslinkable fluororubber polymer (A) is present in an amount of 40 to 90 wt%, and preferably 45 to 70 wt%, and the peroxide-crosslinkable fluororubber polymer (B) is present in an amount of 60 to 10 wt%, and preferably 55 to 30 wt%.

A detailed mechanism by which the second fluororubber composition can attain effects similar to those of the first fluororubber polymer composition, even though its proportion of the fluororubber polymers (A) and (B) is different, is unclear; however, it is assumed that this can be attributed to the balance between the proportion of the peroxide-crosslinkable ternary FKM in the composition and the degree of crosslinking.

As crosslinking agents, both of a polyol crosslinking agent and a peroxide crosslinking agent are used for the polyol-crosslinkable fluororubber polymer (A) and peroxide-crosslinkable fluororubber polymer (B), respectively.

Compounds usable in the first fluororubber composition can also be used as the polyol crosslinking agent for the polyol-crosslinkable fluororubber polymer (A).

Likewise, compounds mentioned above for the first fluororubber composition can be used as the crosslinking accelerator.

Organic peroxide crosslinking agents can be preferably used as the peroxide crosslinking agent for the peroxide-crosslinkable fluororubber polymer (B).

Examples of organic peroxide crosslinking agents include 2,5-dimethylhexane-2,5-dihydroperoxide; 2,5-dimethyl-2,5-di(benzoylperoxy)hexane; tert-butyl peroxide; dicumyl peroxide; tert-butyl cumyl peroxide; 1,1-di(tert-butylperoxy)-3,3,5-trimethylcyclohexane; 2,5-dimethyl-2,5-di(tert-butylperoxy)hexane; 2,5-dimethyl-2,5-di(tert-butylperoxy) hexyne-3, 1,3-di(tert-butylperoxyisopropyl)benxene, tert-butyl peroxybenzoate; tert-butylperoxy isopropyl carbonate; and n-butyl-4,4-di(tert-butylperoxy)valerate. These organic peroxide crosslinking agents are commercially available (e.g., Perhexa 25B-40 by NOF Corporation), and can be used as purchased. Moreover, a commercially available masterbatch containing a raw rubber and a crosslinking agent may be used as the peroxide crosslinking agent. These crosslinking agents may be used alone or in combination.

The content of the peroxide crosslinking agent is preferably 0.3 to 5 parts by weight, and more preferably 0.4 to 3 parts by weight, per 100 parts by weight of the fluororubber polymer.

Examples of crosslinking accelerators (crosslinking aids) usable in the peroxide crosslinking system include zinc oxide and triallyl isocyanurate. Other examples include metal oxides such as zinc oxide; fatty acids such as stearic acid; and triethanolamine and diethylene glycol when a silica reinforcing agent is used.

The content of the crosslinking accelerator is preferably 0.1 to 10 parts by weight, and more preferably 0.2 to 5 parts by weight, per 100 parts by weight of the fluororubber polymer.

In addition to the above-mentioned ingredients, compounds mentioned as examples of rubber compounding ingredients for the first rubber composition can be used in the second fluororubber composition.

The second fluororubber composition can be prepared by, for example, a method in which predetermined amounts of the above-mentioned ingredients are kneaded in an enclosed mixing machine, such as an internal mixer, a kneader, a Banbury mixer, or a general kneading machine for rubber, such as an open roll mill; or by a method in which the above-mentioned ingredients are dissolved in a solvent or the like, and dispersed with a stirrer or the like.

The thus-prepared fluororubber composition is pressurized, heated, and (crosslinked) vulcanized to mold a vulcanizate.

Specifically, the thus-prepared fluororubber composition is heated for about 1 to 120 minutes typically at a temperature of 140 to 230°C (primary vulcanization), using an injection molding machine, a compression molding machine, a vulcanizing press machine, an oven, or the like, and is thereby crosslinked (vulcanized) to mold a vulcanizate (the second crosslinked fluororubber product).

In the invention, secondary crosslinking (vulcanization) can also be performed, as required. When secondary crosslinking (vulcanization) is performed, it may be performed according to a general method, but is preferably performed by, for example, 1 to 20 hours of heat treatment at 200 to 300°C.

The second crosslinked fluororubber product obtained by crosslinking using a polyol and a peroxide in combination can be used as, for example, a rotary shaft seal; the second crosslinked fluororubber product of the invention exhibits significant effects when used as a rotary shaft seal.

## Examples

The invention is described with reference to the Examples below; however, the invention is not limited to these Examples.

### Example 1

<Compounding Ingredients and Amounts Thereof>

Vinylidene fluoride/hexafluoropropylene fluororubber bipolymer:

| | |
|---|---|
| ("Viton A500" by Dupont Dow Easterners; polyol-crosslinkable, Mooney viscosity $ML_{1+10}$ (121°C) 45) | 90 parts by weight |
| Vinylidene fluoride/perfluoro(methyl vinyl ether)/tetrafluoroethylene fluororubber terpolymer ("GLT-600" by DuPont Dow Elastomers) | 10 parts by weight |
| Polyol crosslinking agent: | |
| "Curative VC#30" (by Dupont Dow Elastomers; a masterbatch with a 50 wt% dihydroxy aromatic compound content and a 50 wt% fluororubber (Viton E45) content) | 2.5 parts by weight |
| Polyol crosslinking accelerator: | |

(continued)

| | |
|---|---|
| "Curative VC#20" (by Dupont Dow Elastomers; a masterbatch with a 33 wt% quaternary phosphonium salt content and a 67 wt% fluororubber (Viton E45) content) | 1.2 parts by weight |
| Fillers: | |
| Diatomaceous earth ("Silika 6B" by Chuo Silika Co., Ltd.) | 15 parts by weight |
| Wollastonite ("NYAD400" by NYCO) | 35 parts by weight |
| Carbon black ("N990" by Cancarb) | 2 parts by weight |
| Processing aid (crosslinking accelerator): | |
| Carnauba wax ("VPA No.2" by Dupont Dow Elastomers; melting point: 860°C) | 2.0 parts by weight |
| Acid acceptors: | |
| Calcium hydroxide ("Caldic #2000" by Ohmi Chemical Industry, Co., Ltd.) | 3 parts by weight |
| Magnesium oxide ("Kyowa Mag #150" by Kyowa Chemical Industry, Co., Ltd.) | 6 parts by weight |

<Preparation and Molding of Crosslinked Product (Vulcanizate)>

The above-listed compounding ingredients (except for the crosslinking components) were thrown into a kneader and kneaded for 20 minutes, and the crosslinking components were subsequently thrown into an open roll mill, thereby preparing a composition. The resulting composition was pressurized and crosslinked (vulcanized) for 20 minutes at 170°C to mold a crosslinked product (vulcanizate).

<Evaluation Method>

1. Normal Physical Properties of Crosslinked Fluororubber Product

The above composition (except for the crosslinking components) was used to prepare unvulcanized rubber sheets with a thickness of 2 mm, using a 6-inch mixing roll. The unvulcanized rubber sheets were press-cured for 60 minutes at 180°C, and subsequently oven-cured for 24 hours at 200°C, thereby producing sheet-like rubber test pieces for evaluation of normal physical properties.

These rubber test pieces were evaluated for their rubber hardness Hs, tensile strength Tb (MPa), and elongation Eb (%) according to the following methods. Table 1 shows the evaluation results.

Rubber hardness Hs was measured according to JIS K6253:1997, using a type A durometer.
Tensile strength Tb (MPa) was measured according to JIS K6251.
Elongation Eb (%) was measured according to JIS K6251 (measured at 23±3°C).

2. Product Evaluation

Compounding ingredients were kneaded into green stock (rubber sheet) according to each of the formulations shown in Table 1. The green stock (rubber sheet) was vulcanized and molded to produce an oil seal, and the oil seal was evaluated.

The sliding torque applied on the seal (evaluation of friction) and the oil pump rate (oil suction amount) (evaluation of sealing properties) were measured as follows: the molded oil seal (inner diameter: 85 mm, outer diameter: 105 mm, width: 13 mm) or an abraded seal thereof (prepared by winding sandpaper around the rotation shaft, and abrading away the seal lip of the seal to an amount of abrasion of 300 μm) was set in a rotation tester, and a rotation test was conducted. The results are shown in Table 1.

The test was conducted at 100°C and 2,000 rpm, with a lubricant (Toyota pure castle oil SM 10W-30) being sealed in the shaft center.

The torque applied on the seal during the rotation test was measured as the sliding torque, using a load cell attached to the oil seal.

The pump rate Q was measured as follows: as shown in Fig. 1, a certain amount of oil was fed to the seal lip portion 2 of the oil seal 1 appropriately installed (in a position such that the oil is sucked into the lip) with a syringe or the like, and the time required from the feeding of the oil to the completion of suction was measured (n = 3) and determined according to the equation below. In Fig. 1, reference numeral 3 denotes a garter spring, reference numeral 4 denotes an oil film, and reference numeral 5 denotes the contact width.

Pump rate Q [cc/hr] = amount of oil fed [g] / density of oil [g/cc] / (time required for suction [sec] x 3,600)

Example 2

A fluororubber composition and crosslinked fluororubber product were prepared in the same manner as in Example 1, except that the proportions of the fluororubber polymer components were changed, and the sample was similarly evaluated. The results are shown in Table 1.

Example 3

The same compounding ingredients as those in Example 1 were used except that the following peroxide crosslinking agent and the crosslinking accelerator were added:

Peroxide crosslinking agent: 2,5-dimethylhexane-2,5-dihydroperoxide
("Perhexa 25B-40" by NOF Corporation)
Crosslinking aid: triallyl isocyanate: ("TAIC WH60" by Nippon Kasei Chemical Co., Ltd.)
A fluororubber composition and crosslinked fluororubber product were prepared in the same manner as in Example 1, except that the amounts and proportions of the ingredients were changed as shown in Table 1, and the sample was similarly evaluated. The results are shown in Table 1.

Example 4

The same compounding ingredients as those in Example 1 were used except that a crosslinking agent and crosslinking accelerator were added. A fluororubber composition and crosslinked fluororubber product were prepared in the same manner as in Example 1, except that the amounts and proportions of the ingredients were changed as shown in Table 1, and the sample was similarly evaluated. The results are shown in Table 1.

Comparative Example 1

A fluororubber composition and crosslinked fluororubber product were prepared in the same manner as in Example 1, except that the proportion of the fluororubber polymer component was changed as shown in Table 1, i.e., the binary fluororubber (FKM) (polyol-crosslinkable) was used alone, and the sample was similarly evaluated. The results are shown in Table 1.

Comparative Example 2

A fluorflrubber composition and crosslinked fluororubber product were prepared in the same manner as in Example 1, except that the fluororubber polymer component, crosslinking agent, and crosslinking accelerator were changed as shown Table 1, i.e., the ternary fluororubber (FKM) (peroxide-crosslinkable) was used alone, and the sample was similarly evaluated.
The results are shown in Table 1.

Comparative Example 3

A fluororubber composition and crosslinked fluororubber product were prepared in the same manner as in Example 1, except that the proportions of the fluororubber polymer components were changed, and the sample was similarly evaluated. The results are shown in Table 1.
[Table 1]

| Unity Parts by Weight | | | | | | | | |
|---|---|---|---|---|---|---|---|---|
| | | Ex.1 | Ex. 2 | Ex. 3 | Ex. 4 | Comp. Ex. 1 | Comp. Ex. 2 | Comp. Ex. 3 |
| Polymers | Paiyol-Grosslinkable Binary Fluororubber | 90 | 80 | 80 | 50 | 100 | | 50 |
| | Peroxide-Crosslinkable Ternary Fluororubber | 10 | 20 | 20 | 50 | | 100 | 50 |
| Fillers | Diatomaceous Earth | 15 | 15 | 15 | 15 | 15 | 15 | 15 |
| | Wollastonite | 35 | 35 | 35 | 35 | 35 | 35 | 35 |
| Carbon | Carbon Black | 2 | 2 | 2 | 2 | 2 | 2 | 2 |
| Processing Aid | Carnauba Wax | 2.0 | 2.0 | 2.0 | 2.0 | 2.0 | 2.0 | 2.0 |
| Polyol Crosslinking Agent | Curative VC#30 | 2.5 | 2.5 | 2.0 | 1.25 | 2.5 | 2.5 | 2.5 |
| Polyol Crosslinking Accelerator | Curative VC#20 | 1.2 | 1.2 | 0.96 | 0.6 | 1.2 | | 1.2 |
| Peroxide Crosslinking Agent | 2,5-Dimethyl-2,5-di(tert-butylperoxy) hexane | | | 0.40 | 1.0 | | 2.0 | |
| Peroxide Crosslinking Accelerator | Triallyl Isocyanate | | | 0.24 | 0.6 | | 1.2 | |
| Acid Acceptors | Calcium Hydroxide | 3 | 3 | 3 | 3 | 3 | 3 | 3 |
| | Magnesium Oxide | 6 | 6 | 6 | 6 | 6 | 6 | 6 |
| Total | | 166.7 | 166.7 | 166.6 | 186.45 | 166.7 | 168.7 | 166.7 |
| Normal Physical Values | Hs(Durometer A: 1s) | 81 | 81 | 81 | 81 | 81 | 81 | Not Crosslinked (Vulcanized) |
| | Tb(MPa) | 13 | 9.6 | 11.9 | 9.7 | 13.4 | 8.1 | |
| | Eb(%) | 140 | 240 | 200 | 220 | 180 | 270 | |
| Product Evaluation | | | | | | | | |
| Torque (N×cm) 2000 rpm | New Sample | 31 | 31 | 37 | 34 | 31 | 45 | - |
| | Abraded Sample | 52 | 42 | 52 | 45 | 58 | 72 | - |

(continued)

| Product Evaluation | | | | | | | | |
|---|---|---|---|---|---|---|---|---|
| Pump Rate Q (cc/hr) 2000 rpm | New Sample | 39 | 41 | 42 | 43 | 37 | 63 | - |
| | Abraded Sample | 62 | 69 | 72 | 80 | 57 | 87 | - |

With reference to Table 1, the results of Comparative Example 1 show that, although the sample obtained using the binary fluororubber (FKM) alone has low initial friction, it has pump rates generally lower than those of the samples using the ternary fluororubber, both during the initial period and after frictional abrasion, revealing that the sample has rather poor sealing properties.

The sample of Comparative Example 2 using the ternary fluororubber (FKM) alone has a high pump rate Q during sliding, i.e., has excellent sealing properties, but has a problem in that it has high friction even as initial characteristics.

As compared with the sample of Comparative Example 2, the blend samples of the present invention (Examples 1, 2, 3, and 4) have low torque and low friction, and thus has improved initial characteristics.

Moreover, as compared with the samples of Comparative Examples 1 and 2, the blend samples of the invention have low torque even after frictional abrasion, i.e., has low friction, and therefore, exhibit less deterioration in friction.

Furthermore, the samples of Comparative Examples 1 and 2 exhibit increases in torque (rates of friction deterioration) of 87.1 and 60.0%, respectively, whereas the blend samples of Examples 2 to 4 of the invention exhibit less increases in torque, i.e., from 30 to 40%.

As compared with Comparative Example 1, the blend samples of the invention has high pump rates, and thus, has excellent sealing properties, while exhibiting high pump rates even after frictional abrasion. Moreover, the blend sample of Comparative Example 4 has particularly high sealing properties close to those of the sample of Comparative Example 2.

As explained above, the blend samples of the invention have low friction both as initial characteristics and after abrasion, while exhibiting high sealing properties. Furthermore, while it has been difficult to suppress deterioration in friction in the prior art, the blend samples of the invention exhibit less deterioration in friction, and hence, can maintain excellent product characteristics heretofore unattained in the prior art, even over long-term use.

## Claims

1. A fluororubber composition obtained by blending a polyol crosslinking agent into a fluororubber polymer comprising 70 to 90 wt% of a polyol-crosslinkable fluororubber polymer (A) and 30 to 10 wt% of a peroxide-crosslinkable fluororubber polymer (B).

2. A fluororubber composition obtained by blending a polyol crosslinking agent and a peroxide crosslinking agent into a fluororubber polymer comprising 40 to 90 wt% of a polyol-crosslinkable fluororubber polymer (A) and 60 to 10 wt% of a peroxide-crosslinkable fluororubber polymer (B).

3. The fluororubber composition according to claim 1 or 2, wherein the polyol-crosslinkable fluororubber polymer (A) is vinylidene fluoride/hexafluoropropylene fluororubber bipolymer that is crosslinkable with a polyol; and the peroxide-crosslinkable fluororubber polymer (B) is vinylidene fluoride/hexafluoropropylene/perfluoroalkyl vinyl ether fluororubber terpolymer that is crosslinkable with a peroxide.

4. A crosslinked fluororubber product obtained by crosslinking a fluororubber polymer comprising 70 to 90 wt% of a polyol-crosslinkable fluororubber polymer (A) and 30 to 10 wt% of a peroxide-crosslinkable fluororubber polymer (B), using a polyol crosslinking agent alone.

5. A crosslinked fluororubber product obtained by crosslinking a fluororubber polymer comprising 40 to 90 wt% of a polyol-crosslinkable fluororubber polymer (A) and 60 to 10 wt% of a peroxide-crosslinkable fluororubber polymer (B), using a polyol crosslinking agent and a peroxide crosslinking agent in combination.

6. The crosslinked fluororubber product according to claim 4 or 5, wherein the polyol-crosslinkable fluororubber polymer (A) is vinylidene fluoride/hexafluoropropylene fluororubber bipolymer that is crosslinkable with a polyol; and the

peroxide-crosslinkable fluororubber polymer (B) is vinylidene fluoride/hexafluoropropylene/perfluoroalkyl vinyl ether fluororubber terpolymer that is crosslinkable with a peroxide.

**7.** The crosslinked fluororubber product according to claim 4, 5, or 6, which is used as a rotary shaft seal.

**Amended claims under Art. 19.1 PCT**

**1.** (Canceled)

**2.** (Canceled)

**3.** (Canceled)

**4.** (Amended) A crosslinked fluororubber product obtained by crosslinking a fluororubber polymer comprising 70 to 90 wt% of a polyol-crosslinkable fluororubber polymer and 30 to 10 wt% of a peroxide-crosslinkable fluororubber polymer, using a polyol crosslinking agent alone.

**5.** (Canceled)

**6.** (Amended) The crosslinked fluororubber product according to claim 4, wherein the polyol-crosslinkable fluororubber polymer is vinylidene fluoride/hexafluoropropylene fluororubber bipolymer that is crosslinkable with a polyol; and the peroxide-crosslinkable fluororubber polymer is vinylidene fluoride/hexafluoropropylene/perfluoroalkyl vinyl ether fluororubber terpolymer that is crosslinkable with a peroxide.

**7.** (Amended) The crosslinked fluororubber product according to claim 4 or 6, which is used as a rotary shaft seal.

**8.** (Added) A rotary shaft seal obtained by using a crosslinked fluororubber product, the crosslinked fluororubber product being obtained by crosslinking a fluororubber polymer comprising 70 to 90 wt% of vinylidene fluoride/hexafluoropropylene fluororubber bipolymer that is crosslinkable with a polyol; and 30 to 10 wt% of vinylidene fluoride/hexafluoropropylene/perfluoroalkyl vinyl ether fluororubber terpolymer that is crosslinkable with a peroxide, using a polyol crosslinking agent alone.

Fig. 1

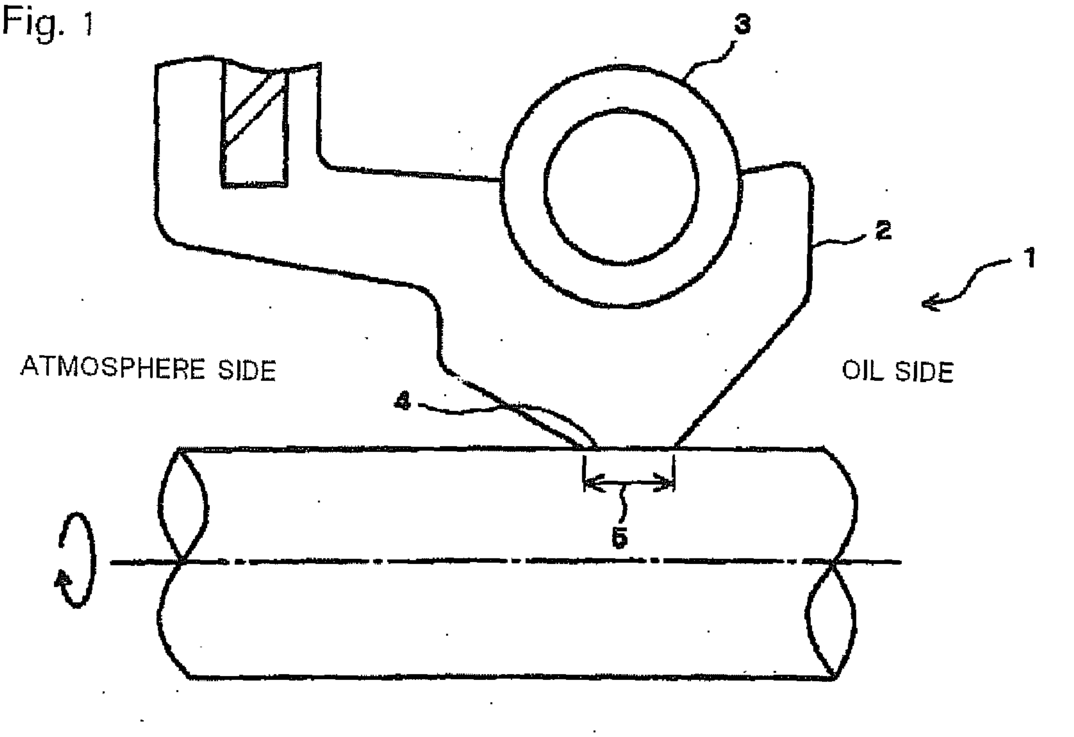

**INTERNATIONAL SEARCH REPORT**

International application No.
PCT/JP2008/055907

A. CLASSIFICATION OF SUBJECT MATTER
*C08L27/12*(2006.01)i, *F16J15/32*(2006.01)i

According to International Patent Classification (IPC) or to both national classification and IPC

B. FIELDS SEARCHED

Minimum documentation searched (classification system followed by classification symbols)
C08L27/12, F16J15/32

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)
WPI

C. DOCUMENTS CONSIDERED TO BE RELEVANT

| Category* | Citation of document, with indication, where appropriate, of the relevant passages | Relevant to claim No. |
|---|---|---|
| X | JP 2004-099895 A (Freudenberg-Nok General Partnership), 02 April, 2004 (02.04.04), Par. Nos. [0009] to [0052] & US 2004/0048983 A1 & EP 1400563 A1 | 1-3,5-7 |
| X | JP 2006-212996 A (Daikin Industries, Ltd.), 17 August, 2006 (17.08.06), Par. Nos. [0049] to [0067], [0090] to [0101], [0109] to [0116]; table 1 (Family: none) | 1,4,7 |
| A | JP 2000-212363 A (Mitsubishi Cable Industries, Ltd.), 02 August, 2000 (02.08.00), Full text (Family: none) | 1-7 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 09 July, 2008 (09.07.08) | 22 July, 2008 (22.07.08) |
| Name and mailing address of the ISA/ Japanese Patent Office | Authorized officer |
| Facsimile No. | Telephone No. |

Form PCT/ISA/210 (second sheet) (April 2007)

**INTERNATIONAL SEARCH REPORT**

International application No.
PCT/JP2008/055907

C (Continuation). DOCUMENTS CONSIDERED TO BE RELEVANT

| Category* | Citation of document, with indication, where appropriate, of the relevant passages | Relevant to claim No. |
|---|---|---|
| A | JP 06-271734 A (Asahi Chemical Industry Co., Ltd.), 27 September, 1994 (27.09.94), Full text (Family: none) | 1-7 |

Form PCT/ISA/210 (continuation of second sheet) (April 2007)

**INTERNATIONAL SEARCH REPORT**

International application No.
PCT/JP2008/055907

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:

The "special technical feature" of the subject matters of claims 1-7 is "a fluororubber composition which comprises: fluororubber polymers comprising 70-90 wt.% polyol-crosslinkable fluororubber polymer (A) and 30-10 wt.% peroxide-crosslinkable fluororubber polymer (B); and a polyol crosslinking agent incorporated in the polymers."

However, as a result of a search, it has become obvious that that feature is not novel because it is disclosed in the document JP 2004-099895 A (Freudenberg-Nok General Partnership), 2 April, 2004, paragraphs [0009] to [0052].

(continued to extra sheet)

1. ☒ As all required additional search fees were timely paid by the applicant, this international search report covers all searchable claims.
2. ☐ As all searchable claims could be searched without effort justifying additional fees, this Authority did not invite payment of additional fees.
3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest** the

☐ The additional search fees were accompanied by the applicant's protest and, where applicable, payment of a protest fee.

☐ The additional search fees were accompanied by the applicant's protest but the applicable protest fee was not paid within the time limit specified in the invitation.

☒ No protest accompanied the payment of additional search fees.

Form PCT/ISA/210 (continuation of first sheet (2)) (April 2007)

**INTERNATIONAL SEARCH REPORT**

International application No.
PCT/JP2008/055907

Continuation of Box No.III of continuation of first sheet(2)

Consequently, the composition is within the scope of the prior art. This common matter (the composition) is hence not considered to be a special technical feature in the meaning of the second sentence of Rule 13.2 of the Regulations under the PCT.

Therefore, there is no matter common among all the subject matters of claims 1-7.

Any other common matter is not considered to be a special technical feature in the meaning of the second sentence of Rule 13.2 of the Regulations under the PCT. No technical relationship in the meaning of Rule 13 of the Regulations under the PCT can hence be found among those different subject matters.

To sump up, it is obvious that the subject matters of claims 1-7 do not comply with the requirement of unity of invention.

Form PCT/ISA/210 (extra sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 9143327 A
- JP 8151565 A
- JP 3066714 A